# DEMANDE DE BREVET EUROPEEN

(11) **EP 1 862 782 A1**
(43) Date de publication de la demande: **05.12.2007**
(21) Numéro de dépôt: 07109477.5
(22) Date de dépôt: 03.06.2007
(51) Int. Cl.: G01F 23/24, G01F 23/00

(54) **Sonde résistive de capteur pour la détection du niveau d'un liquide**

(30) Priorité: 02.06.2006 FR 0605259
(71) Demandeur: SC2N, 94000 Créteil (FR)
(72) Inventeur: Moisson, Eric, 14120, MONDEVILLE (FR); Goderneaux, Eric, 14120, MONDEVILLE (FR); Castro, Pascal, 14120, MONDEVILLE (FR)
(74) Mandataire: Croonenbroek, Thomas Jakob

(57) **Abrégé**

La présente invention a pour objet une sonde résistive (10) de capteur pour la détection du niveau d'un liquide destinée à être partiellement immergée dans le liquide à surveiller, comprenant un connecteur électrique (15) pour relier le capteur à une alimentation électrique (20) et destinée à être reliée à des moyens (30) de mesure d'une grandeur physique en fonction de l'alimentation électrique appliquée, caractérisé en ce qu'elle comprend en outre un filtre passe-bas (35) pour protéger ladite sonde (10) de courants hautes fréquences.

## Description

La présente invention concerne une sonde résistive de capteur pour la détection du niveau d'un liquide, en particulier pour la détection du niveau d'un liquide à surveiller dans un véhicule automobile, comme par exemple le niveau d'huile de carter, de la boîte de vitesses, le niveau de liquide de refroidissement du circuit de refroidissement, du circuit de climatisation ou le niveau de carburant du réservoir d'essence ou de gazole.

Le contrôle du niveau de liquide dans le domaine automobile est une préoccupation permanente, car il en dépend le bon fonctionnement du véhicule, voir la sécurité des utilisateurs.

La Demanderesse a développé des dispositifs et capteurs pour la détection d'un niveau de liquide fonctionnant sur la base de la technique du fil chaud. A titre d'exemple, on cite des brevets au nom de la Demanderesse publiés sous les N° FR 2 367 276, FR 2 514 497, FR 2 690 521 et FR 2 703 775.

Ces dispositifs et capteurs comportent de manière générale une sonde résistive qui, à l'état monté sur le véhicule, est partiellement immergée dans le liquide à surveiller. Cette sonde est réalisée sous forme d'un fil électriquement résistif qui s'échauffe lorsqu'il est parcouru par un courant du fait que la résistivité présente un coefficient élevé de température. Le plus souvent, les sondes sont formées par un fil très fin en métal à base de nickel chrome, plié à mi-longueur pour former deux brins parallèles portés par un support électriquement isolant.

La sonde est reliée à une alimentation électrique, en général une alimentation en courant pulsé. Une électronique de traitement relève la tension aux bornes de la sonde pour suivre celle-ci, et en particulier son évolution dans le temps, jusqu'à ce que la sonde ait approché son état de stabilité thermique.

Pour ces sondes, on exploite l'effet que la résistivité de la sonde augmente en fonction de sa température du fait de son coefficient de température positif.

L'augmentation en température dépend de la masse thermique du fil, de l'énergie apportée, de la température initiale et des échanges thermiques avec l'environnement, en particulier les échanges thermiques avec l'air pour la partie émergée de la sonde et le liquide pour la partie immergée de la sonde.

Par conséquent, la variation de la résistance et donc la tension aux bornes de la sonde entre le début et la fin d'un pulse de courant alimentant la sonde dépend du niveau de liquide. En exploitant l'accroissement de la tension au fil du temps par une électronique d'exploitation, on connaît le niveau de liquide dans le réservoir.

En effet, si le niveau de liquide dans son réservoir est élevé, la sonde est plus refroidie et l'augmentation de la température et donc de la résistance est plus faible. A l'inverse, si le niveau est faible, la sonde est moins refroidie et l'augmentation de la température et donc de la résistance est plus forte.

Les inventeurs de la présente invention ont fait le constat que ces sondes donnent en général un niveau de précision suffisant, mais que dans certains cas, cette précision peut se dégrader en fonction de l'environnement hostile où le capteur est installé.

Des recherches et études importantes des inventeurs ont permis de connaître la source de cette dégradation de précision.

En effet, de plus en plus, l'environnement dans lequel fonctionnent ces capteurs se caractérise par un rayonnement électromagnétique important qui provient de diverses sources de l'électronique du véhicule. Pour le rayonnement électromagnétique, généralement de haute fréquence, la sonde et en particulier les fils d'alimentation de la sonde agissent comme une antenne de réception et induisent des courants, en particulier dans la sonde.

Comme cela a été exposé ci-dessus, l'augmentation de la résistivité dépend entre autre de l'énergie apportée à la sonde sous forme de courant. Pour le bon fonctionnement de la sonde et pour obtenir une bonne précision, il est nécessaire de connaître et de maîtriser la quantité de courant apportée.

Or, les courants induits dans la sonde par un effet d'antenne des faisceaux d'alimentation électrique de la sonde contribuent à l'échauffement de la sonde par l'énergie apportée. Mais la quantité ne peut pas être maîtrisée et par conséquent, la précision de mesure se dégrade.

Cette constatation surprenante des inventeurs est d'autant plus importante, que l'environnement électromagnétique de la sonde peut varier fortement en fonction des systèmes électriques ou électroniques du véhicule mis en fonctionnement ou de la position géographique du véhicule (par exemple du véhicule garé à proximité d'une ligne haute tension ou d'un transformateur du réseau électrique de distribution) et que pour des questions de diminution de coût, la quantité minimale de liquide (huile moteur, liquide de refroidissement etc.) est réduite au maximum.

Pour protéger les systèmes du véhicule, il est donc important de pouvoir alerter rapidement et de façon fiable l'utilisateur, ce qui n'est possible qu'avec un dispositif de détection du niveau d'un liquide, dont la précision est importante et parfaitement maîtrisée.

On connaît des documents FR 2 738 337 ou FR 2 486 651 des capteurs du niveau d'un liquide avec une sonde résistive. Ces dispositifs comprennent au niveau des unités de traitement des signaux des filtres passe-bas pour éliminer dans la suite du circuit le bruit de mesure haute fréquence, non porteur d'information. Toutefois, la disposition des filtres passe-bas dans les circuits des dispositifs connus n'est pas adaptée pour protéger la sonde d'un échauffement intempestif dû au rayonnement électromagnétique, généralement de haute fréquence de l'environnement qui induit des courants, en particulier dans la sonde.

Le but de la présente invention est donc de proposer un capteur de détection du niveau d'un liquide plus évolué qui permet en particulier de s'affranchir de cet effet d'antenne décrit ci-dessus.

A cet effet, l'invention a pour objet une sonde résistive de capteur pour la détection du niveau d'un liquide destinée à être partiellement immergée dans le liquide à surveiller, comprenant un connecteur électrique pour relier le capteur à une alimentation électrique et destinée à être reliée à des moyens de mesure d'une grandeur physique en fonction de l'alimentation électrique appliquée, caractérisé en ce qu'elle comprend en outre un filtre passe-bas de protection pour protéger ladite sonde de courants hautes fréquences pouvant contribuer à l'échauffement de ladite sonde.

D'autres avantages et caractéristiques apparaîtront à la lecture de la description de l'invention, ainsi que de la figure unique sur laquelle est représenté un schéma électrique d'un dispositif de détection d'un niveau de liquide incorporant un capteur selon l'invention.

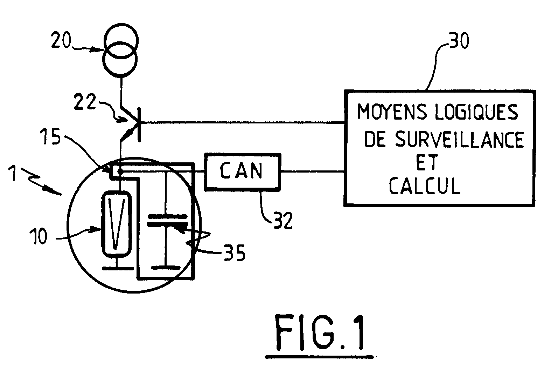

La figure 1 présente de façon schématique un capteur 1 de détection du niveau d'un liquide comprenant une sonde résistive 10 destinée à être partiellement immergée dans un liquide à surveiller, tel que de l'huile moteur, de l'huile de la boîte de vitesse, de l'huile pour le circuit d'assistance à la direction, du liquide de refroidissement, du liquide pour le circuit de climatisation.

Cette sonde 10 est par exemple réalisée sous forme d'un fil électriquement résistif qui s'échauffe lorsqu'il est parcouru par un courant grâce au fait que la résistivité présente un coefficient élevé de température. De façon connue en soi (voir par exemple les documents de l'art antérieur cités dans la partie introductive), on peut réaliser la sonde par un fil très fin en métal à base de nickel chrome, plié à mi-longueur pour former deux brins parallèles portés par un support électriquement isolant. A l'état monté du capteur sur un véhicule, la disposition des brins est généralement perpendiculaire par rapport au plan défini par le liquide, de sorte qu'il y a une partie immergée et une partie émergée de la sonde 10.

Le capteur 1 avec sa sonde 10 est par la suite relié via un connecteur électrique 15 (représenté schématiquement sur la figure par un carré) à une alimentation électrique 20 réalisée de préférence par une source de courant constant.

La sonde est alimentée par des impulsions de courants dont la longueur est déterminée par le fait que la sonde puisse atteindre un équilibre thermique.

A cet effet, un interrupteur 22 est interposé entre l'alimentation 20 et la sonde 10. La durée pendant laquelle l'interrupteur est en état fermé constitue la durée de l'impulsion alimentant la sonde. Avantageusement l'interrupteur est un transistor contrôlé par des moyens 30 de mesure de la tension aux bornes de la sonde 10.

De plus, les moyens 30 sont aptes à suivre l'évolution de la grandeur électrique mesurée, c'est-à-dire de la tension, et à déduire de cette évolution des informations sur le niveau de liquide.

Cette mesure se fait de façon connue et comme cela est décrit dans les documents de l'état de la technique cités précédemment.

Selon une forme avantageuse, les moyens 30 sont réalisés sous forme de moyens numériques contrôlés par un microprocesseur, ce qui nécessite qu'un convertisseur analogique/numérique CAN 32 soit intercalé entre la sonde 10 et les moyens 30.

Selon l'invention, un filtre passe-bas 35 est prévu branché en parallèle à la sonde 10 pour protéger celle-ci contre tout courant reçu via un effet d'antenne par les faisceaux alimentant la sonde 10.

Les inventeurs ont constaté que ces courants reçus via un effet d'antenne sont à des fréquences élevées, alors que la mesure de la tension aux bornes de la sonde 10 et son évolution peut être considérée comme un phénomène basse fréquence.

Ainsi, par le filtre passe-bas, on empêche que les courants hautes fréquences parviennent dans la sonde et perturbent ainsi le résultat de mesure en contribuant à l'échauffement de la sonde lorsque celle-ci est connectée via l'interrupteur 22 à l'alimentation 20.

De préférence la capacité 35 est formée d'un condensateur possédant une valeur entre 2nF et 80nF.

Par ailleurs, il s'est avéré avantageux d'intégrer le filtre passe bas au niveau du connecteur électrique du capteur. Il peut s'agit par exemple d'un simple condensateur fixé et connecté électriquement par une soudure aux broches de connexion associées à la sonde 10 du connecteur 15.

## Revendications

1. Sonde résistive (10) de capteur pour la détection du niveau d'un liquide destinée à être partiellement immergée dans le liquide à surveiller, comprenant un connecteur électrique (15) pour relier le capteur à une alimentation électrique (20) et destinée à être reliée à des moyens (30) de mesure d'une grandeur physique en fonction de l'alimentation électrique appliquée, **caractérisé en ce qu'**elle comprend en outre un filtre passe-bas (35) pour protéger ladite sonde (10) de courants hautes fréquences.

2. Sonde selon la revendication 1, **caractérisée en ce que** le filtre passe-bas (35) comprend une capacité branchée en circuit parallèle avec ladite sonde (10).

3. Sonde selon la revendication 2, **caractérisée en ce que** la capacité est formée d'un condensateur possédant une valeur entre 2nF et 80nF.

4. Sonde selon l'une quelconque des revendications précédentes, **caractérisée en ce** le filtre passe bas est intégré au niveau du connecteur électrique (15).
